# DEMANDE DE BREVET EUROPEEN

(11) **EP 0 860 308 A1**
(43) Date de publication de la demande: **26.08.1998**
(21) Numéro de dépôt: 98400419.2
(22) Date de dépôt: 20.02.1998
(51) Int. Cl.: B60H 1/00

(54) **Dispositif de chauffage au niveau du plancher pour cabine de véhicule**

(30) Priorité: 24.02.1997 FR 9702156
(71) Demandeur: Etablissements Michel, 60240 Montagny-en-Vexin (FR)
(72) Inventeur: Michel, Luc, Ecancourt, 95280 Jouy-Le-Moutier (FR)
(74) Mandataire: Gorrée, Jean-Michel

(57) **Abrégé**

Dispositif de chauffage au niveau du plancher pour cabine de véhicule, notamment de cabine de véhicule industriel, agricole ou analogue, caractérisé en ce qu'il comprend : une plaque supérieure (2) formant repose-pieds constituée en un matériau thermiquement bon conducteur, au moins un conduit (1) pour un fluide de chauffage disposé sous ladite plaque supérieure (2), ledit conduit étant en contact thermiquement conducteur avec la plaque supérieure (2), et une couche d'un matériau thermiquement isolant (3) disposée sous ledit conduit (1) pour empêcher la chaleur dégagée par le conduit (1) d'être dissipée vers le bas.

## Description

La présente invention concerne un dispositif de chauffage au niveau du plancher pour cabine de véhicule, notamment de cabine de véhicule industriel, agricole ou analogue ou de plate-forme ouverte de conduite.

L'invention a essentiellement pour but de proposer un dispositif de chauffage de conception simple et bon marché, peu encombrant, procurant un chauffage efficace de la cabine de véhicules tels que tracteurs ou autres de travaux analogues; ce dispositif de chauffage doit pouvoir non seulement être installé dans des véhicules neufs lors de la fabrication de ceux-ci, mais surtout doit pouvoir être installé dans des véhicules déjà existants, voire anciens et être aidément raccordable au circuit d'eau de refroidissement du moteur ; enfin ce dispositif doit être conçu de telle manière qu'il puisse être réalisé à la demande selon des caractéristiques de dimensions, de forme et de puissance de chauffage propres à chaque installation.

A ces fins, un dispositif de chauffage tel que précité se caractérise essentiellement, étant agencé conformément à l'invention, en ce qu'il comprend :
- une plaque supérieure formant repose-pieds constituée en un matériau thermiquement bon conducteur,
- au moins un conduit pour un fluide de chauffage disposé sous ladite plaque supérieure, ledit conduit étant en contact thermiquement conducteur avec la plaque supérieure,
- et une couche d'un matériau thermiquement isolant disposée sous ledit conduit pour empêcher la chaleur dégagée par le conduit d'être dissipée vers le bas.

On constitue ainsi un dispositif de structure élémentaire qui est la plus simple possible et qui utilise une source thermique située à proximité et sans répercussion sur le fonctionnement du moteur. En outre, les parties constituantes sont disposibles, dans le commerce, sous forme d'éléments de très grandes dimensions : leur découpe peut donc s'effectuer selon des formes quelconques sans qu'il en résulte un surcroit sensible de travail, et il devient possible de réaliser des dispositifs de chauffage conformés à la demande afin qu'ils soient adaptés à des formes spécifiques de plancher ; de même, si besoin en est en cas de plancher non plan, le dispositif peut être réalisé sous forme non plane; enfin la puissance de chauffage peut très facilement être adaptée au besoin d'une cabine d'un volume donné en mettant en place seulement la longueur nécessaire de conduit qui, avantageusement, est disposé en serpentin.

En pratique, la plaque de dessus, qui sert directement de repose-pieds, est métallique et avantageusement réalisée sous forme d'une plaque épaisse d'aluminium ou d'alliage d'aluminium, qui est couramment disponible ; la couche isolante peut être constituée par une plaque de matière synthétique ou, de préférence pour mieux résister au contact du conduit chaud, par une nappe de laine de verre, laine de roche ou analogue. Le conduit, quant à lui, peut être métallique, par exemple en acier, ou en cuivre, ou en aluminium, mais il peut aussi avantageusement être en une matière synthétique telle que du caoutchouc synthétique qui, médiocrement conducteur, confère un effet de régulation thermique et évite de rendre la plaque supérieure brûlante. De préférence le conduit est en contact direct avec la plaque supérieure : pour améliorer la transmission thermique on peut prévoir une pâte thermiquement conductrice entre le conduit et la plaque (par exemple pâte siliconée), ou bien le recours à un conduit de section non circulaire, présentant un plat (section carrée ou rectangulaire ou semi-circulaire par exemple).

Toujours pour améliorer le rendement thermique du dispositif et réduire au maximum les fuites thermiques vers le bas en direction du plancher du véhicule, on peut disposer, entre la couche isolante et le conduit, une feuille métallique, telle qu'une feuille mince d'aluminium, formant réflecteur thermique vers le haut.

L'ensemble peut être enfermé dans un boîtier, tel qu'un boîtier en tôle d'acier facile à fabriquer, ouvert en haut et dont la paroi de dessus est constituée par la susdite plaque supérieure formant repose-pieds, autour de laquelle est fixé le boîtier par un moyen approprié quelconque. De préférence également, le fond du boîtier peut être équipé de plots soit obtenus par matriçage du fond du boîtier, soit rapportés sur le fond et constitués en matière isolante, de manière que le dispositif ne soit en appui sur le plancher du véhicule que par une surface de contact réduite et si possible thermiquement mauvaise conductrice.

Ensuite de quoi, on obtient un dispositif de chauffage efficace, peu coûteux, fabricable à la demande du point de vue de sa forme et de ses dimensions, et réalisable avec une très faible épaisseur, par exemple de quelques centimètres seulement, qui ne procure aucune gène pour l'actionnement des pédales du véhicule.

L'invention sera mieux comprise à la lecture de la description détaillée de certains modes de réalisation de l'invention donnés uniquement à titre d'exemples purement illustratifs. Dans cette description, on se réfère aux dessins annexés sur lesquels :
- La figure 1 est une vue de principe très schématique illustrant la constitution de base d'un dispositif de chauffage agencé conformément à l'invention ; et
- La figure 2 est une vue illustrant un mode de réalisation préféré du dispositif de la figure 1.

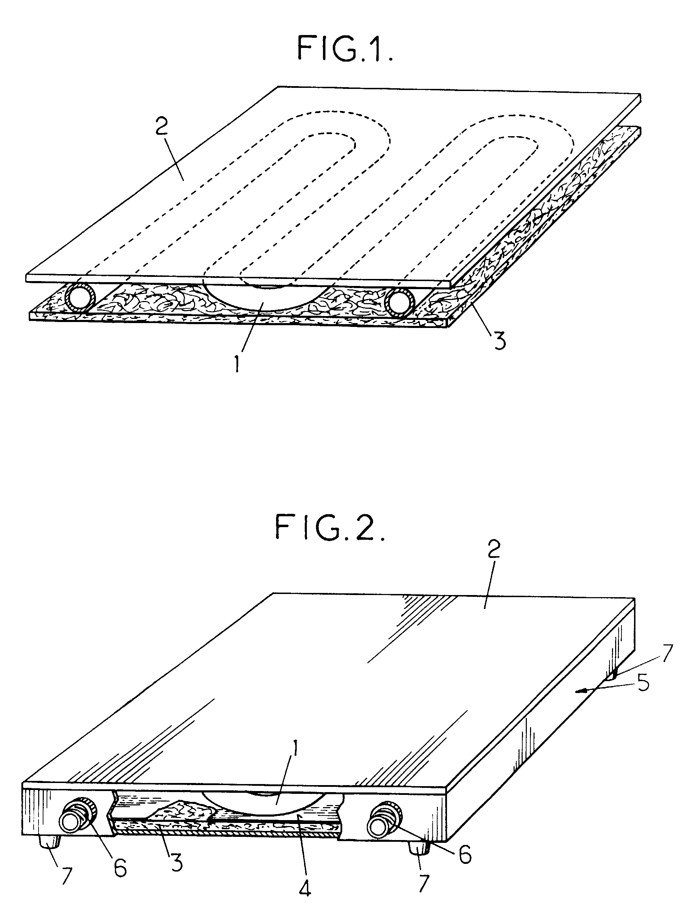

En se référant tout d'abord à la figure 1, le dispositif de chauffage comprend un organe de chauffage constitué par au moins un conduit 1 propre à véhiculer un fluide de chauffage, tel que l'eau chaude, et raccordable à cet effet, par des moyens non montrés, au circuit de refroidissement du moteur du véhicule à équiper. Ce conduit peut être constitué en un matériau thermiquement bon conducteur, et notamment être métallique, par exemple en acier ou de préférence en cuivre, en aluminium ou un de leurs alliages. Toutefois, il peut avantageusement être constitué en matériau synthétique, tel que du caoutchouc synthétique, de manière, d'une part, à faciliter sa mise en forme (serpentin) mais sutout, d'autre part, à conférer un effet de régulation thermique en raison de sa médiocre conductibilité et d'éviter que la plaque supérieure dont question ci-après soit rendue par trop brûlante. Le conduit est avantageusement disposé en serpentin et sa longueur est déterminée en fonction de la puissance de chauffage à obtenir.

Au dessus du conduit 1 et en contact thermique avec celui-ci est disposée une plaque supérieure 2 formant repose-pieds qui est en un matériau thermiquement bon conducteur. Cette plaque peut être en acier, mais, à la fois pour ne pas alourdir l'appareil et pour obtenir une meilleure conductibilité thermique, la plaque 2 est de préférence une plaque épaisse en aluminium ou alliage d'aluminium couramment disponible dans le commerce.

Le conduit 1 et la plaque 2 peuvent être en contact direct l'un avec l'autre. Pour améliorer la transmission thermique de l'un à l'autre, on peut prévoir entre eux une couche d'une pâte thermiquement bonne conductrice, telle qu'une graisse siliconée, et/ou on peut choisir un conduit de section non circulaire, présentant un plat (par exemple section en demi-cercle, section carrée ou rectangulaire).

Pour éviter une fuite thermique trop importante vers le bas, en direction du plancher du véhicule, on dispose sous le conduit 1 une couche 3 d'un matériau thermiquement isolant formant écran thermique : par exemple une plaque de matière synthétique ou, mieux, une feuille de matière fibreuse telle que laine de verre ou laine de roche ou analogue.

La plaque métallique 2 ainsi que la couche isolante 3, disponibles dans le commerce en grandes dimensions, peuvent être découpées à la demande selon les contours spécifiques correspondant à des conformations particulières de planchers de véhicules. De plus, l'épaisseur de l'ensemble du dispositif peut être très faible, de l'ordre de quelques centimètres (par exemple 2 à 5 cm), de sorte qu'un tel dispositif de chauffage mis en place sur le plancher de la cabine d'un véhicule n'est pas plus encombrant qu'un tapis de sol thermiquement et phoniquement isolant habituellement disposé à cet emplacement et il ne gène pas l'actionnement des pédales.

A la figure 2 est illustré un exemple de réalisation préféré d'un dispositif de chauffage conforme à l'invention mettant en oeuvre la structure de base décrite ci-dessus, les mêmes références numériques étant conservées pour désigner les organes apparaissant à la figure 1.

Pour encore améliorer le rendement thermique du dispositif, on prévoit de disposer une feuille métallique 4, telle qu'une feuille mince d'aluminium, sur le dessus de la couche isolante 3, de manière à constituer un réflecteur renvoyant la chaleur vers le haut en direction de la plaque supérieure 2 et à réduire les fuites thermiques vers le bas.

L'ensemble est abrité dans un boîtier 5, par exemple réalisé de façon économique en tôle d'acier, qui présente un fond et des parois latérales, lesquelles sont fixées supérieurement autour de la plaque de dessus 2 qui constitue la paroi de dessus : cette plaque 2 sert ainsi de repose-pieds à proprement parler. Des raccords 6 sont prévus dans une paroi latérale du boîtier 5 pour établir la connexion requise entre le conduit 1 et les tuyaux de liaison avec le circuit de refroidissement du moteur.

La paroi de fond du boîtier peut être munie de plots 7 de manière que le dispositif de chauffage ne soit en appui sur le plancher de la cabine du véhicule que par une surface de contact réduite et si possible thermiquement mauvaise conductrice, afin de réduire, de cette manière également, la déperdition de chaleur vers le bas. Les plots peuvent être économiquement formés par matriçage de la paroi de fond du boîtier 5 ou bien, plus efficacement du point de vue isolation thermique, par des blocs de matière isolante rapportés.

Comme il va de soi et comme il résulte déjà de ce qui précède, l'invention ne se limite nullement à ceux de ses modes d'application et de réalisation qui ont été plus particulièrement envisagés ; elle en embrasse au contraire toutes les variantes.

## Revendications

1. Dispositif de chauffage au niveau du plancher pour cabine de véhicule, notamment de cabine de véhicule industriel, agricole ou analogue, caractérisé en ce qu'il comprend :
- une plaque supérieure (2) formant repose-pieds constituée en un matériau thermiquement bon conducteur,
- au moins un conduit (1) pour un fluide de chauffage disposé sous ladite plaque supérieure (2), ledit conduit étant en contact thermiquement conducteur avec la plaque supérieure (2),
- et une couche d'un matériau thermiquement isolant (3) disposée sous ledit conduit (1) pour empêcher la chaleur dégagée par le conduit (1) d'être dissipée vers le bas.

2. Dispositif de chauffage selon la revendication 1, caractérisé en ce qu'une couche métallique (4) formant réflecteur vers le haut pour la chaleur est interposée entre la couche de matériau thermiquement isolant (3) et le conduit (1).

3. Dispositif de chauffage selon la revendication 1 ou 2, caractérisé en ce qu'il comprend un boîtier (5), la susdite plaque supérieure (2) constituant la paroi de dessus de ce boîtier.

4. Dispositif de chauffage selon l'une quelconque des revendications précédentes, caractérisé en ce que la plaque de dessus (2) est en aluminium ou un alliage d'aluminium.

5. Dispositif de chauffage selon l'une quelconque des revendications précédentes, caractérisé en ce que le conduit (1) est en matière synthétique, notamment en caoutchouc synthétique.

6. Dispositif de chauffage selon l'une quelconque des revendications précédentes, caractérisé en ce que la couche isolante (3) est en laine de verre, laine de roche ou analogue.

7. Dispositif de chauffage selon l'une quelconque des revendications 2 à 6, caractérisé en ce que le réflecteur (4) est une feuille d'aluminium déposée sur la surface supérieure de la couche isolante (3).

8. Dispositif de chauffage selon l'une quelconque des revendications 3 à 7, caractérisé en ce que le boîtier (5) est en tôle d'acier.

9. Dispositif de chauffage selon l'une quelconque des revendications 3 à 8, caractérisé en ce que la paroi de fond du boîtier (5) est munie de plots (7), notamment en matière isolante, de manière que le dispositif ne soit en appui sur le plancher du véhicule que par une surface de contact réduite et si possible thermiquement mauvaise conductrice.
